# FASCICULE DE BREVET EUROPEEN

(11) **EP 2 402 249 B1**
(45) Date de publication et mention de la délivrance du brevet: **17.04.2013**
(21) Numéro de dépôt: 10305712.1
(22) Date de dépôt: 01.07.2010
(51) Int. Cl.: B64D 17/38, B64D 17/60, B64D 17/64, B64D 17/74

(54) **Dispositif de sécurité pour parachute**
Sicherheitseinrichtung für Fallschirm
Safety device for parachute

(43) Date de publication de la demande: 04.01.2012
(73) Titulaire: Aerazur, 78370 Plaisir (FR)
(72) Inventeur: Suze, Gaël, 60590, Trie-Château (FR)
(74) Mandataire: Novagraaf Technologies

(56) Documents cités:
- EP-A2- 2 060 488
- FR-A1- 2 923 801

## Description

L'invention concerne un dispositif de sécurité, précisément de libération du parachute principal et d'ouverture d'un parachute de secours.

Comme divulgué dans EP 2 060 488, on connaît déjà un tel dispositif qui, comme celui de l'invention, comprend :
- une première drisse reliant un extracteur du parachute de secours (ci-après « extracteur de secours ») à un sac de déploiement de ce parachute,
- une deuxième drisse reliant le parachute principal à la première drisse,
- et au moins une aiguille de blocage liée à la première drisse, d'un premier côté de celle-ci, et passée (engagée), de façon libérable, dans au moins une boucle de blocage formée sur une drisse de blocage liée à l'aiguille de blocage et passée à travers successivement :
   * une boucle d'attache liée à la deuxième drisse, vers une extrémité de celle-ci,
   * et un premier oeillet formé à travers la première drisse.

Des difficultés demeurent. Entre autre, demeure un besoin pour contrer efficacement, même dans des circonstances délicates, une tendance à la libération de l'aiguille de blocage en utilisant la force de rétention transmise par la traînée du parachute principal libéré (situation dénommée « cutaway » en anglais).

Il faut en outre éviter les situations où des efforts ou sollicitations contraires peuvent contrarier le fonctionnement de l'extracteur de secours dans la situation où ce dernier est activé directement par l'utilisateur sans libération préalable du parachute principal (situation dénommée : action secours directe), tout en sécurisant l'aiguille de blocage qui ne doit pas se dégager inopinément.

Pour apporter une solution à tout ou partie de ce qui précède, il est proposé que le dispositif présenté ci-avant soit tel que:
- la première drisse présente un second oeillet formé à travers elle, plus près de l'attache de l'aiguille de blocage à la première drisse que le premier et où passe la drisse de blocage, en direction du second côté, opposé au premier, de la première drisse, avant de passer, en sens inverse, dans le premier oeillet,
- et la drisse de blocage est adaptée à ce que la boucle d'attache liée à la deuxième drisse puisse coulisser librement le long dudit second côté de la première drisse, entre les premier et second oeillets.

Ainsi, sans vrillage de la zone des drisses dont il est question ci-dessus :
- on favorisera, entre trainée du parachute principal et trainée de l'extracteur de secours, un rapport de force en faveur du parachute principal : la même variable est concernée, à savoir la vitesse propre, laquelle est identique pour les deux et le rapport de surface entre parachute principal et extracteur de secours est typiquement supérieur à 2,
- à partir du moment où l'ensemble parachute principal/drisse de blocage est efficacement en tension, la connexion entre les première et seconde drisses sera active de façon performante, quelle que soit la force de traction exercée par l'extracteur de secours,
- dans une situation d'activation directe de l'extracteur de secours (cas où le parachute principal est donc resté dans le sac, qui peut être typiquement le harnais du parachutiste, ci-après sac-harnais), aucune tension néfaste ne sera exercée par la deuxième drisse, via sa boucle d'attache, sur la drisse de blocage liée à l'aiguille de blocage.

Pour éviter les interférences de fonctions et coincement inopiné, il est conseillé qu'après être passée à travers la boucle d'attache, la boucle de blocage de la drisse de blocage passe directement à travers le premier oeillet de la première drisse.

Ainsi, notamment, ce n'est pas de cette manière qu'une liaison au rabat du sac-harnais sera assurée.

Avec les dispositions qui précèdent, ou du moins celles liées au second oeillet et au coulissement libre de la drisse de blocage, on pourra en outre favorablement prévoir que, dans l'état de l'aiguille de blocage passée dans la boucle de blocage, la première drisse présente au moins un pli situé entre l'endroit d'attache de ladite aiguille de blocage sur cette première drisse et le second oeillet, et qu'aucun moyen de maintien dudit pli ne soit prévu entre les deux rabats de ce pli qui se font face.

Ceci prouve que bien qu'aucun tel moyen de maintien du pli formé (consistant notamment dans une couture ou dans une liaison magnétique au brevet cité ci-avant ou dans FR 2 923 801) n'est ici nécessaire, voire utile. Et malgré cela une sécurité suffisante est assurée lors de la libération du parachute principal et de l'extraction du parachute de secours, du fait des dispositions ci-avant.

Si nécessaire, pour éviter que telle drisse ou élément qu'elle porte se coince inopinément et/ou pour un confort du pliage général ou encore une confiance dans celui-ci de la part du parachutiste, on conseille par ailleurs que tout ou partie des dispositions qui suivent soient mises en oeuvre :
- dans ledit état engagé de l'aiguille de blocage, la drisse de blocage est positionnée sur un rabat adapté à venir par-dessus un espace de rangement (appelé typiquement: conteneur de secours) d'un sac-harnais qui reçoit le sac de déploiement de la réserve dans lequel la voile de réserve est pliée, ladite drisse de blocage étant ainsi positionnée par l'intermédiaire d'une patte engagée dans un gousset du rabat,
- cette patte est liée à la boucle d'attache dans laquelle passe la drisse de blocage,
- toujours dans l'état engagé de l'aiguille de blocage, cette dernière est positionnée sur un rabat de sac-harnais (qui peut être celui précité), par l'intermédiaire d'une poche de ce rabat qui la reçoit,
- un moyen de rappel élastique sous lequel passe l'aiguille de blocage quand elle est engagée dans la boucle de blocage plaque alors cette aiguille de blocage contre la première drisse, en la maintenant.

Suivant un autre aspect, l'invention concerne encore un parachute comprenant un parachute principal, un parachute de secours et le dispositif de sécurité précité.

D'autres caractéristiques de cette invention apparaitront encore de la description qui suit où :
- figure 1, on voit une situation de libération du parachute principal (où, suite à un incident, le parachute principal reste conditionné dans son sac de déploiement),
- figure 2, on voit le dispositif de l'invention en situation active de liaison entre les première et seconde drisses,
- figure 3, on est en configuration de libération du parachute principal extrayant le parachute secours en désactivant l'extracteur secours,
- la figure 4 illustre la potentialité de la rétention du dispositif de l'invention lors d'une cinématique de procédure de secours direct
- et les figures 5 à 7 montrent des détails structurels et de montage du dispositif de l'invention sur le sac-harnais du parachutiste.

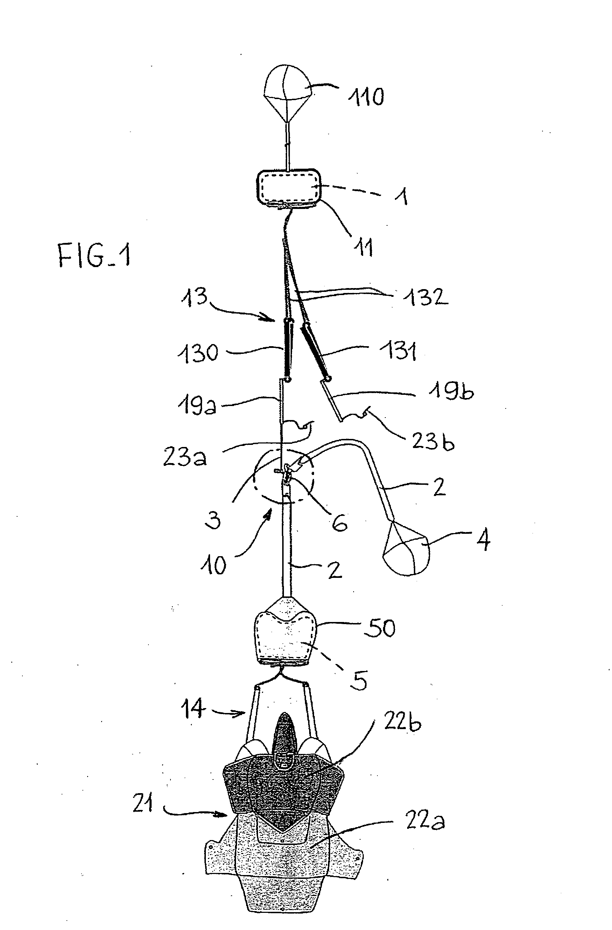

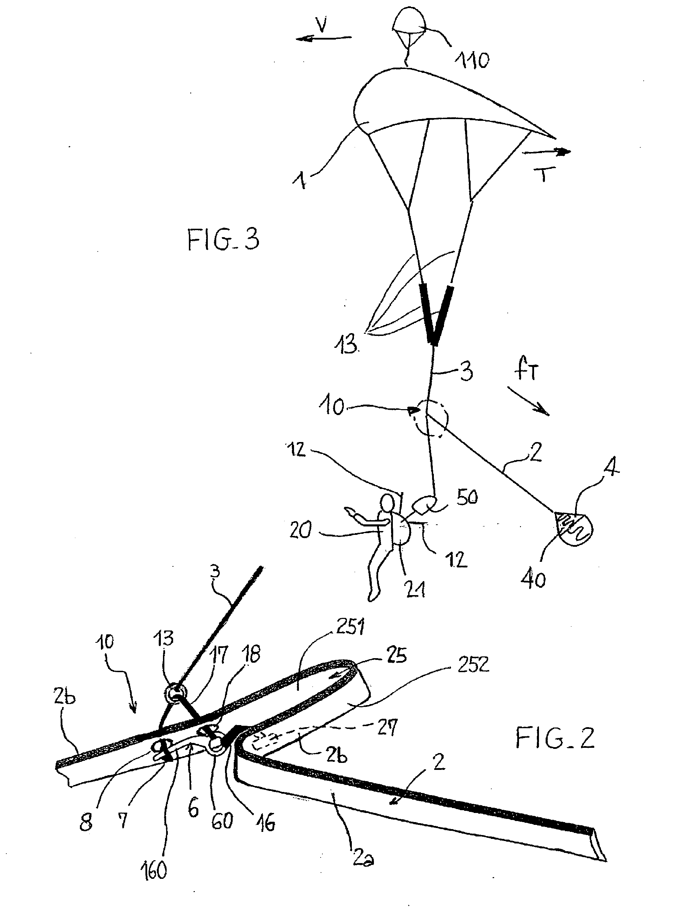

Figure 1, on a représenté le dispositif 10 de l'invention lors d'un disfonctionnement : l'incident consiste en un blocage du parachute principal 1 dans son sac de déploiement 11. Cette situation est amenée à perdurer sans évolution vers le stade représentée figure 3 où le parachute principal 1 est sorti de son sac de déploiement. Les élévateurs et les suspentes du parachute (repères respectifs 132,130,131 ; repère général : liaison 13, figs. 1,3) sont déconnectés du sac-harnais 21 (broches 23a et 23b retirées). La trainée générée par l'extracteur 110 et le sac de déploiement 11 est suffisante pour agir sur le dispositif 10 suivant la même cinématique que figure 3.

Figure 3, l'extraction du parachute de secours, avec parallèlement désactivation de l'extracteur de secours 4, est en cours.

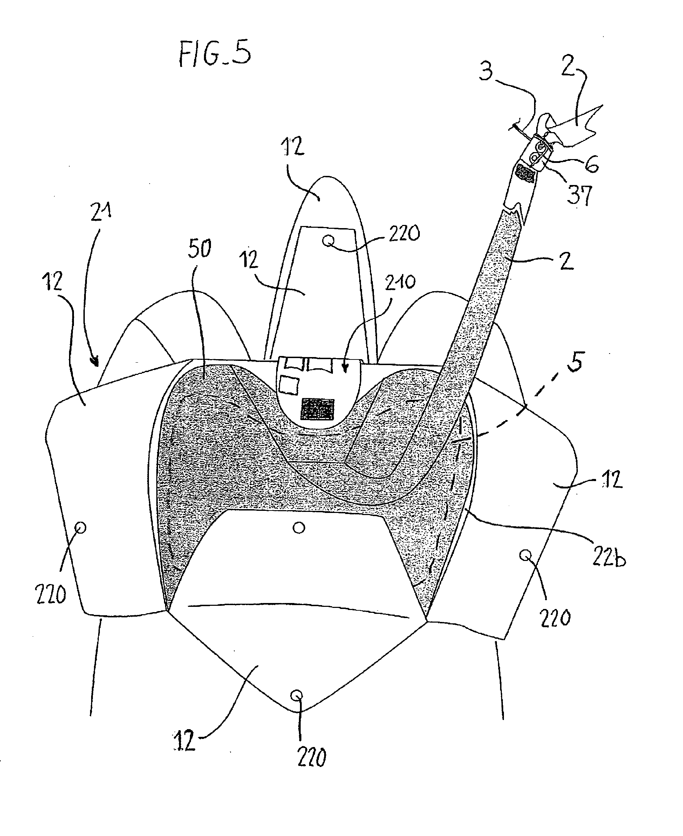

Via les suspentes 132 puis, ici, l'élévateur gauche 130 et la drisse gauche 19a (voir le détail de la liaison 13 sur la fig.1), le parachute principal sollicite alors une drisse de liaison 3 (dite ici « deuxième drisse ») reliée à une autre drisse de liaison 2 (dite ici « première drisse ») reliant l'extracteur 4 de secours à un sac 50 de déploiement du parachute de secours 5 alors sorti du conteneur de secours 22b, par ouverture des rabats 12 qui ferment normalement l'accès au sac 50 à cet endroit (voir fig.5). Le tout est assujetti au parachutiste 20 qui porte donc ce sac/harnais 21 où les différents éléments précités étaient initialement pliés. Ainsi, le repère 21 est un conteneur assujettissant un harnais ajusté autour du parachutiste, un conteneur principal 22a contenant le sac de déploiement principal 11 et le conteneur de secours 22b contenant le sac de déploiement secours 50 dans lequel est, à l'origine, plié le parachute 5 de réserve, comme schématisé fig.1 où le repère général 14 montre les élévateurs de secours formant liaison entre le sac-harnais 21 et le sac de déploiement secours 50.

La deuxième drisse 3 relie alors le parachute principal 1 à la première drisse 2.

Comme on l'a compris, le dispositif 10 a pour vocation, dans le cas ci-dessus connu en anglais comme « cutaway », de coupler le parachute principal 1 à l'extraction du parachute de secours 5 afin d'optimiser le temps d'extraction de ce dernier. Ce dispositif doit permettre une extraction convenable du système d'extraction de secours «classique» (comprenant l'extracteur 4 et la drisse 2), en cas de procédure de secours directe (c'est-à-dire lorsque le parachute principal 1 n'a pas été déployé efficacement et ne peut donc servir d'extracteur). Il doit donc se désactiver de la manière la moins perturbante possible en cas d'ouverture du conteneur de secours 22b et jaillissement de l'extracteur de secours 4.

Plus nettement figure 2, on voit qu'à cette fin, ce dispositif 10 comprend (au moins) une aiguille de blocage 6 liée à la première drisse 2, d'un premier côté 2a de celle-ci.

Dans l'exemple, une patte textile 16 est à une extrémité 16a cousue à la drisse 2 et présente à l'opposé une boucle dans laquelle passe la tête annulaire 60 de l'aiguille de blocage 6. Un autre moyen d'attache à la drisse 2 aurait pu être retenu.

Dans la situation active illustrée, le système est fonctionnel : l'aiguille 6 passe de façon libérable dans la boucle de blocage 7 formée sur la drisse de blocage 17 liée à cette aiguille de blocage. Ceci a été établi lors du conditionnement de la voilure de secours 5 dans le sac-harnais 21, précisément ici sur le rabat 210, par-dessus le sac 50.

Dans l'exemple, la drisse de blocage 17 est fixée ou attachée de façon solide à la tête 60 de l'aiguille de blocage 6 par une boucle qui entoure cette tête. Par ailleurs, cette drisse 17 est, dans cette situation, passée à travers successivement :
- la boucle d'attache 13 liée à la deuxième drisse 3, vers une extrémité de celle-ci,
- et un premier oeillet 8 formé à travers la première drisse 2.

A la différence de ce que divulguait EP 2 060 488 (figure 2E) et pour une sécurité opérationnelle, on conseille ici ce qui suit :
- la première drisse 2 présente un second oeillet 18 formé à travers elle, plus près de l'attache 16a de l'aiguille de blocage 6 à la drisse 2 que ne l'est le premier oeillet 8,
- ensuite, on peut constater figure 2 que, dans la situation active précitée et à partir de sa fixation à l'aiguille 6 du côté 2a de la première drisse 2, la drisse de blocage 17 passe d'abord, boucle de blocage 7 en tête, à travers le second oeillet 18, en direction donc du second côté 2b (opposé à 2a) de la drisse 2, où elle traverse la boucle d'attache 13, avant de passer, en sens inverse, dans le premier oeillet 8, pour déboucher à nouveau du premier côté 2a, là où la boucle de blocage 7 reçoit alors l'aiguille de blocage 6.
- autre point important : la drisse de blocage 17 est adaptée à ce que la boucle 13 d'attache liée à la deuxième drisse 3 puisse coulisser librement le long du second côté 2b de la drisse 2, entre les premier et second oeillets 8, 18.

Ceci précisé, revenons à la situation de libération de la figure 1 ou 3 (« cutaway ») où la deuxième drisse de liaison 3 est donc en tension.

Figure 1, on constate que cette deuxième drisse de liaison 3 est reliée à la drisse 19a, laquelle comporte, à son extrémité opposé à celle liée à l'élévateur 130, une broche 23a destinée à la fermeture du conteneur de secours 22b.

Lors de l'action de libération du parachute principal, la désolidarisation des élévateurs 130 et 131 de l'ensemble sac-harnais 21 a provoqué la mise en tension des drisses intermédiaires 19a et 19b puis le retrait des broches 23a et 23b que chacune d'elle porte donc à son extrémité opposée à celle par laquelle elle est reliée à l'une des deux suspentes 132 du groupe de suspentes, via les élévateurs.

Lors de ce retrait, les broches 23a et 23b ont été tirées à l'écart du conteneur de secours 22b, permettant à ce dernier de s'ouvrir par écartement des rabats 12, ce qui a libéré l'extracteur 4 de secours.

Par exemple par libération du ressort interne 40 qu'il peut renfermer (voir figure 3), cet extracteur 4 a en effet, du fait de cette ouverture, été expulsé hors du conteneur de secours 22b, tandis que la deuxième drisse de liaison 3 continuait à être sollicitée successivement par la drisse 19a, l'élévateur 130 et le groupe de suspentes 132 suspendues sous le sac de déploiement principal 11 sorti du conteneur principal 22a et au dessus duquel avait été lui-même expulsé l'extracteur 110 du parachute principal (via à nouveau la libération par exemple d'un ressort interne qu'il peut lui aussi renfermer).

Dans une telle configuration de libération du parachute principal 1, comme sur la figure 3, ce qui s'oppose à la propension au déverrouillage du dispositif 10 de libération de ce parachute principal et à l'ouverture du parachute de secours 5 est la force de rétention transmise par la trainée T du parachute principal libéré, via la drisse 3, tant que l'aiguille 6 est engagée dans la boucle 7, comme sur la figure 2.

Le rapport de force entre la trainée du parachute principal 1 et celle de l'extracteur de secours 4 est typiquement en faveur du parachute principal car fonction de la même variable qu'est la vitesse propre V de l'ensemble.

A partir du moment où l'ensemble parachute principal/dispositif 10 est en tension (drisse 17 tendue et aiguille 6 engagée), cette aiguille 6 demeure en place (état actif), sans risque notable de désengagement quelle que soit la force de traction fT exercée par l'extracteur de secours 4 ; voir figure 2 à nouveau.

Dans la situation d'activation directe de l'extracteur 4 de secours (le parachute principal 1 et le sac de déploiement 11 sont alors restés dans le conteneur principal 22a), aucune tension n'est exercée par la deuxième drisse 3 sur la drisse de blocage 17 dans la boucle de blocage 7 de laquelle passe encore l'aiguille 6. De ce fait, cette dernière peut alors glisser hors de la boucle 7, ce qui sépare les drisses 2 et 3 et libère notamment de toute connexion avec le parachute principal 1 l'ensemble d'extraction secours comprenant l'extracteur 4, la drisse 2 et le sac de déploiement 50,.

On notera que, aiguille de blocage 6 engagée, la présence des deux oeillets 8, 18, ainsi que le libre coulissement de la drisse de blocage 17 le long du côté 2b de la première drisse 2 favorisent notablement à la fois l'efficacité du dispositif 10 lorsqu'il est actif (figure 2) et sa rapidité de désactivation lorsque l'aiguille de blocage 6 peut se dégager de la boucle 7 suite à un flottement de la deuxième drisse 3 qui n'est plus/pas tendue, alors que l'effort de gonflement de l'extracteur 4 de secours qui se déploie entraîne une traction suffisante sur la première drisse 2 pour solliciter la séparation entre les drisses 2 et 3.

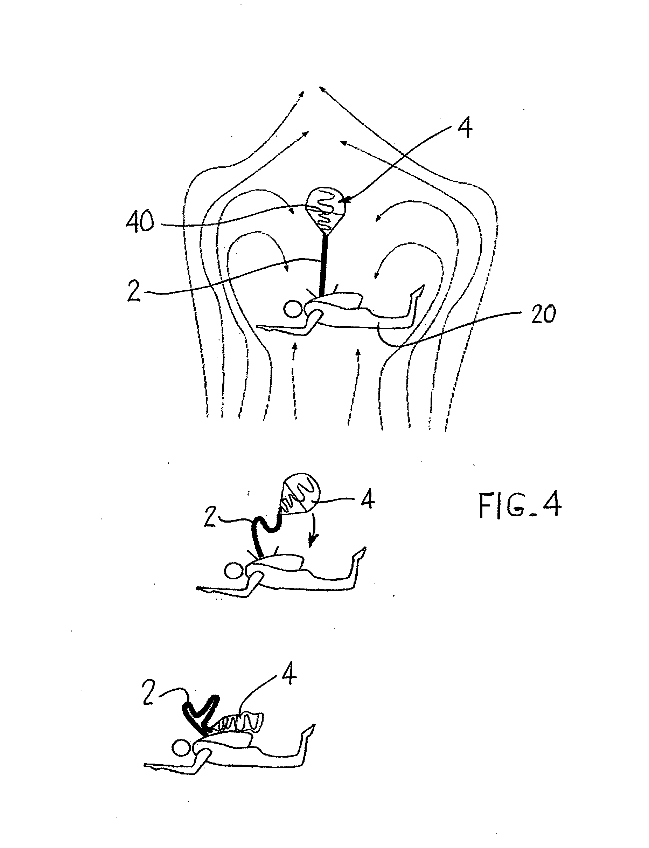

La figure 4 illustre ce qui risque de se passer si, dans l'hypothèse de fonctionnement ci-dessus, la force de rétention ou d'engagement de l'aiguille de blocage 6 dans la boucle 7 reste supérieure à la résultante de la force d'extraction du parachute de secours 5 créée par la sortie de l'extracteur 4 de secours (avec alors : trainée essentiellement de cet extracteur, poussée du ressort 40 , poids essentiellement dudit extracteur et turbulences avec retour du flux de vent relatif). Une force résultante chaotique peut à ce moment solliciter vers le bas (dos du parachutiste 20) l'extracteur 4 juste sorti. Dans certains cas aléatoires cet extracteur peut même retomber, ce qui a minima retarde l'ouverture du parachute de secours, avec de surcroit risque d'emmêlement de la première drisse 2 et/ou de l'extracteur 4 dégonflé, quand les deux retombent sur le sac-harnais du parachutiste.

L'invention limite les risques d'une telle situation.

Grâce au montage décrit ci-avant, sensiblement aucune tension ou sollicitation parasite ne vient en outre perturber la capacité de la libération de l'aiguille 6, notamment aucune liaison au rabat du sac concerné (en particulier au conteneur de secours 22b).

Une remarque comparable peut être soulevée concernant le fait qu'on conseille par ailleurs que, toujours dans l'état de l'aiguille de blocage 6 passée dans la boucle de blocage 7, et comme montré figure 2, la première drisse 2 présente un pli 25 simple en « U » (voire double en « W ») situé entre l'endroit 16a de l'attache de ladite aiguille de blocage 6 sur cette première drisse et l'oeillet 8 (second oeillet).

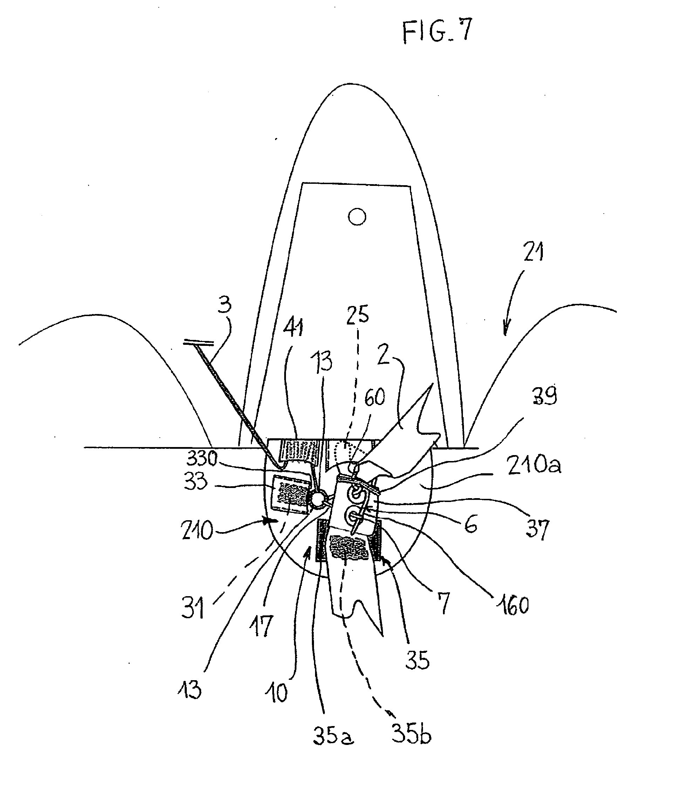

Aucun moyen de maintien du pli n'est prévu entre les deux rabats, tels 251, 252, de ce pli qui se font face. A ce sujet, on notera qu'aux efforts de frottements près, inférieurs typiquement à 1-3 daN, le dépliage du pli 25 qui permet de libérer l'aiguille de blocage 6 suite à la situation de traction précitée sur la seule drisse 2, ne subit ici quasiment pas d'autres contraintes que celles dues à la mise en place préférée du dispositif 10 dans différents logements permettant son rangement opérationnel sur le rabat 210 du conteneur de secours 22b, comme montré figure 7. On évitera ainsi que le dispositif 10 se déplace de manière dommageable une fois le sac-harnais conditionné pour le saut, notamment au moment de l'activation de telle ou telle partie du parachute (considéré comme un tout).

Sur ce point, on peut constater sur la figure 7 que, dans ledit état engagé de l'aiguille de blocage 6, et dispositif 10 rangé dans le sac 21, la drisse de blocage 17 est positionnée sur un rabat 210 du conteneur de secours 22b, partie du sac-harnais 21 porté par le parachutiste.

Comme montré figure 5, le rabat 210 est adapté à venir par-dessus l'espace 22b de rangement du sac-harnais 21 où a été rangé le sac 50 dans lequel le parachute 5 de réserve est alors plié , l'espace 22b associé aux rabats 12 et 210 constituant l'ensemble dénommé ci-avant conteneur de secours. La drisse de blocage 17 peut être ensuite favorablement positionnée par l'intermédiaire d'une patte 31 engagée dans un gousset 33 du rabat 210 prévu (fixé) sur la face extérieure 210a de ce rabat, lorsqu'il est rabattu par-dessus le sac de déploiement secours 50 conditionné dans l'espace 22b comme schématisé figures 5, 6 ou 7.

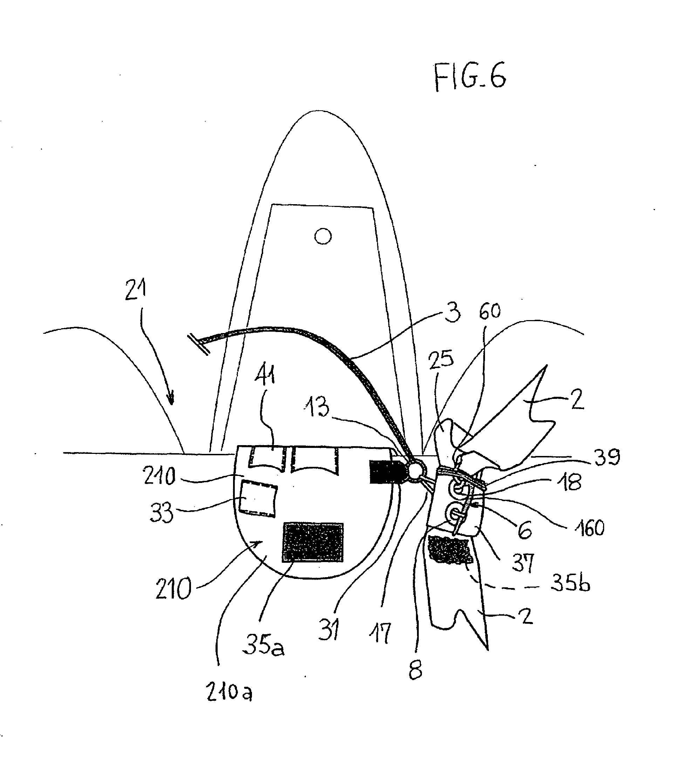

De préférence, cette patte 31 sera liée à la boucle 13 d'attache (figures 6, 7). La patte sera relativement rigide (par exemple tissu épais) et l'espace intérieur du gousset 33 pas trop serré de façon à ne pas faire obstacle à la sortie de la patte 31 lors de l'expulsion de l'extracteur 4, par exemple par libération de son ressort interne 40 à l'ouverture des rabats 12, typiquement consécutivement au retrait à l'écart des oeillets 220 d'un pion de retenue (non représenté).

De manière comparable, il est recommandé que, dans l'état engagé de l'aiguille de blocage 6, comme figures 2 et 7, la première drisse 2 porteuse de cette aiguille de blocage soit positionnée sur un rabat, ici le rabat 210, face 210a, adapté à venir par-dessus le sac de déploiement secours 50 conditionné dans l'espace de rangement 22b du sac-harnais 21. Ce positionnement est ici favorablement assuré par l'intermédiaire d'une bande auto-agrippante 35 (on utilise aussi le terme scratch ou « velcro » TM) en deux parties 35a, 35b prévues respectivement sur le rabat et la première drisse. Sa position sur la première drisse est de préférence à l'opposée du pli 25 par rapport à l'aiguille 6 engagée dans la boucle 7 ; voir figure 7.

Comme précisé ci-dessus, le rôle de la bande auto-agrippante 35 est de positionner la première drisse 2 sur le rabat ; il n'y a pas d'effet attendu de retenue de l'aiguille 6 ou de la drisse 17.

On préférera par ailleurs que le gousset 33 soit positionné latéralement par rapport à la partie 35a de la bande auto-agrippante 35, à une distance correspondant sensiblement à celle séparant la boucle 13 de la partie 35b. L'ouverture 330 du gousset 33 est dirigée vers la partie 35a.

Notamment pour favoriser le bon maintien d'une bande auto-agrippante 35, on préférera encore qu'à l'endroit où l'aiguille de blocage 6 est engagée de façon libérable dans la boucle de blocage 7, la première drisse 2 présente un renfort structurel 37 ; figure 7.

Autre recommandation : que, dans la position active précitée et donc illustrée figure 7 où l'aiguille 6 est engagée dans la boucle de blocage 7, un moyen 39 de rappel élastique sous lequel passe cette aiguille (voir aussi figure 6) plaque l'aiguille sur la première drisse 2 en la maintenant ainsi. Une fois encore l'objectif est de positionner les éléments, ici l'aiguille 6 ; il n'y a pas d'effet attendu de retenue.

Favorablement, la tête 60 qui terminera cette aiguille de blocage 6 à une extrémité se présentera comme un anneau fermé (figure 2) où sera donc liée la première drisse 2 et le moyen de rappel élastique 39 sera de préférence un élastique disposé pour recouvrir cet anneau fermé quand l'aiguille 6 est donc engagée dans la boucle 7; figure 7.

Autre considération utile pour le même effet de bon maintien attendu dans la position rangée dans le sac de la figure 7 : que l'aiguille 6 présente à une extrémité un/l'anneau fermé 60 qui se prolonge de façon sensiblement tangentielle par une partie allongée 160 autour de laquelle la boucle de blocage 7 s'engage.

Quant à cette boucle 7, on conseille, à nouveau pour la sécurité, mais également une efficacité de coulissement de la drisse 17 dans la situation de la figure 2 que la deuxième drisse 3 comprenne, en tant que boucle 13, un anneau métallique fermé, autour duquel passe en boucle solide (repliée sur elle-même) l'extrémité concernée de la drisse 3, la boucle 7 de la drisse 17 étant par contre préférentiellement une boucle de drisse repliée sur elle-même, pour un meilleur contact avec l'aiguille 6 à maintenir, comme expliqué plus haut.

Figure 7, on constate que, patte 31 engagée dans le gousset 33, la boucle ou anneau 13 demeure à l'extérieur. A proximité de cette boucle 13, la deuxième drisse 3 est alors par contre localement lovée ou pliée en lacets dans un second gousset 41. Ainsi, on limite les risques d'emmêlement. Ce second gousset 41 est formé sur la face 210a du rabat 210. Il s'ouvre en direction du gousset 33. Les deux goussets 33,41 et la partie de bande 35a sont réalisés à proximité immédiate les uns des autres.

## Revendications

1. Dispositif de libération du parachute principal et d'ouverture d'un parachute de secours, comprenant :
- une première drisse (2) reliant un extracteur (4) du parachute de secours à un sac (5) de déploiement de ce parachute,
- une deuxième drisse (3) reliant le parachute principal à la première drisse (2),
- et au moins une aiguille de blocage (6) liée à la première drisse (2), d'un premier côté de celle-ci, et passée, de façon libérable dans au moins une boucle de blocage (7) formée sur une drisse de blocage (17) liée à l'aiguille de blocage (6) et passée à travers successivement :
* une boucle d'attache (13) liée à la deuxième drisse (3), vers une extrémité de celle-ci,
* et un premier oeillet (8) formé à travers la première drisse (2),
**caractérisé en ce que** :
- la première drisse (2) présente un second oeillet (18) formé à travers elle, plus près de l'attache de l'aiguille de blocage (6) à la première drisse (2) que le premier et où passe la drisse de blocage (17), en direction du second côté, opposé au premier, de la première drisse (2), avant de passer, en sens inverse, dans le premier oeillet (8),
- et la drisse de blocage (17) est adaptée à ce que la boucle d'attache (13) liée à la deuxième drisse (3) puisse coulisser librement le long dudit second côté de la première drisse (2), entre les premier et second oeillets.

2. Dispositif selon la revendication 1, **caractérisé en ce qu'**après être passée à travers la boucle d'attache (13), la boucle de blocage (7) de la drisse de blocage (17) passe directement à travers le premier oeillet (8).

3. Dispositif selon l'une des revendications précédentes, **caractérisé en ce que**, dans l'état de l'aiguille de blocage (6) passée dans la boucle de blocage (7), la première drisse (2) présente au moins un pli situé entre l'endroit de l'attache de ladite aiguille de blocage (6) sur cette première drisse et le second oeillet, et aucun moyen de maintien dudit pli n'est prévu entre les deux rabats de ce pli qui se font face.

4. Dispositif selon l'une des revendications précédentes, **caractérisé en ce que** dans ledit état engagé de l'aiguille de blocage, la drisse de blocage (17) est positionnée sur un rabat adapté à venir par-dessus un espace de rangement d'un sac-harnais qui reçoit un sac de déploiement de la réserve dans lequel la voile de réserve est pliée, ladite drisse de blocage étant ainsi positionnée par l'intermédiaire d'une patte engagée dans un gousset du rabat.

5. Dispositif selon la revendication 4, **caractérisé en ce que** ladite patte est liée à la boucle d'attache (7) dans laquelle passe la drisse de blocage (17).

6. Dispositif selon l'une des revendications précédentes, **caractérisé en ce que**, dans l'état engagé de l'aiguille de blocage (6), la première drisse (2) porteuse ce cette aiguille de blocage est positionnée sur un rabat adapté à venir par-dessus un espace de rangement d'un sac-harnais qui reçoit un sac de déploiement de la réserve dans lequel la voile de réserve est pliée, par l'intermédiaire d'une bande auto-agrippante en deux parties prévues respectivement sur le rabat et la première drisse.

7. Dispositif selon l'une quelconque des revendications précédentes, **caractérisé en ce qu'**un moyen de rappel élastique (39) sous lequel passe l'aiguille de blocage (6) quand elle est engagée dans la boucle de blocage (7) plaque alors l'aiguille de blocage sur la première drisse (2) en la maintenant.

8. Dispositif selon la revendication 7, **caractérisé en ce que** l'aiguille de blocage (6) se termine à une extrémité par un anneau fermé (60) par lequel elle est liée à la première drisse (2) et le moyen de rappel élastique est un élastique disposé pour recouvrir ledit anneau fermé quand l'aiguille de blocage (6) est engagée dans la boucle de blocage (7).

9. Dispositif selon l'une quelconque des revendications précédentes, **caractérisé en ce qu'**à l'endroit où l'aiguille de blocage (6) est engagée de façon libérable dans la boucle de blocage (7), la première drisse (2) présente un renfort structurel(37).

10. Dispositif selon l'une quelconque des revendications précédentes, **caractérisé en ce que** l'aiguille de blocage (6) présente à une extrémité un anneau fermé (60) qui se prolonge de façon sensiblement tangentielle par une partie allongée (160) autour de laquelle la boucle de blocage (7) s'engage.

11. Dispositif selon l'une quelconque des revendications précédentes, **caractérisé en ce que** la boucle d'attache (13) se présente comme une boucle de drisse dans laquelle passe la drisse de blocage (17), tandis que la boucle d'attache (13) de la deuxième drisse (3) comprend un anneau métallique fermé.

12. Parachute comprenant un parachute principal (1) un parachute de secours (5) et le dispositif (10) selon l'une des revendications précédentes.

## Claims

1. Device for the releasing of the main parachute and the opening of a reserve parachute, comprising:
- a first halyard (2) connecting an extractor (4) of the reserve parachute to a deployment bag (5) of this parachute,
- a second halyard (3) connecting the main parachute to the first halyard (2),
- and at least one locking needle (6) linked to the first halyard (2), on a first side of the latter, and passed, in a releasable manner in at least one locking loop (7) formed on a locking halyard (17) linked to the locking needle (6) and passed successively through:
-- an attachment loop (13) linked to the second halyard (3), towards one end of the latter,
-- and a first eyelet (8) formed through the first halyard (2),
**characterised in that**:
- the first halyard (2) has a second eyelet (18) formed through it, closer to the fastener of the locking needle (6) to the first halyard (2) than the first and where the locking halyard (17) passes in the direction of the second side, opposite the first, of the first halyard (2), before passing, in the opposite direction, in the first eyelet (8),
- and the locking halyard (17) is adapted so that the attachment loop (13) linked to the second halyard (3) can freely slide along said second side of the first halyard (2), between the first and second eyelets.

2. Device according to claim 1, **characterised in that** after passing through the attachment loop (13), the locking loop (7) of the locking halyard (17) passes directly through the first eyelet (8).

3. Device according to one of the preceding claims, **characterised in that**, in the state wherein the locking needle (6) is passed in the locking loop (7), the first halyard (2) has at least one fold located between the location of the fastener of said locking needle (6) on this first halyard and the second eyelet, and no means of retaining said fold are provided between the two flaps of the fold which are facing one another.

4. Device according to one of the preceding claims, **characterised in that** in said engaged state of the locking needle, the locking halyard (17) is positioned on a flap adapted to come over a storage space for a harness bag which receives a deployment bag of the reserve wherein the canopy of the reserve is folded, said locking halyard being as such positioned by the intermediary of a prong engaged in a bracket of the flap.

5. Device according to claim 4, **characterised in that** said prong is linked to the attachment loop (7) wherein the locking halyard (17) passes.

6. Device according to one of the preceding claims, **characterised in that**, in the engaged state of the locking needle (6), the first halyard (2) that is carrying this locking needle is positioned on a flap adapted to come over a storage space for a harness bag which receives a deployment bag of the reserve wherein the canopy of the reserve is folded, via a self-gripping strip in two portions respectively provided on the flap and the first halyard.

7. Device according to anyone of the preceding claims, **characterised in that** a means of elastic returning (39) under which the locking needle (6) passes when it is engaged in the locking loop (7) then thrusts the locking needle on the first halyard (2) by retaining it.

8. Device according to claim 7, **characterised in that** the locking needle (6) ends at one end with a closed ring (60) with which it is linked to the first halyard (2) and the means of elastic returning is an elastic arranged in order to cover said closed ring when the locking needle (6) is engaged in the locking loop (7).

9. Device according to anyone of the preceding claims, **characterised in that** at the location where the locking needle (6) is engaged in a releasable manner in the locking loop (7), the first halyard (2) has a structural reinforcement (37).

10. Device according to anyone of the preceding claims, **characterised in that** the locking needle (6) has at one end a closed ring (60) which extends in a substantially tangential manner by an elongated portion (160) around which the locking loop (7) is engaged.

11. Device according to anyone of the preceding claims, **characterised in that** the attachment loop (13) is presented as a halyard loop wherein the locking halyard (17) passes, while the attachment loop (13) of the second halyard (3) comprises a closed metal ring.

12. Parachute comprising a main parachute (1) a reserve parachute (5) and the device (10) according to one of the preceding claims.

## Patentansprüche

1. Vorrichtung zum Freigeben des Hauptfallschirms und zum Öffnen eines Reservefallschirms, umfassend:
- eine erste Leine (2) zum Verbinden eines Extraktors (4) des Reservefallschirms mit einem Beutel (5) zum Entfalten dieses Fallschirms,
- eine zweite Leine (3) zum Verbinden des Hauptfallschirms mit der ersten Leine (2),
- und zumindest einen Arretierstift (6), der mit der ersten Leine (2) auf einer ersten Seite derselben verbunden ist, und der lösbar durch zumindest eine Arretierschleife (7) geführt wird, die auf einer Arretierleine (17) ausgebildet ist, die mit dem Arretierstift (6) verbunden ist, und die nacheinander durch folgende Teile führt:
-- einen Befestigungsring (13), der mit der zweiten Leine (3) im Bereich eines Endes derselben verbunden ist,
-- und eine erste Öse (8), die durch die erste Leine (2) führt,
**dadurch gekennzeichnet, dass**:
- die erste Leine (2) eine zweite Öse (18) aufweist, die näher an der Befestigung des Arretierstifts (6) an der ersten Leine (2) durch eben dieselbe führt, als die erste Öse, und durch die die Arretierleine (17) in Richtung der zweiten Seite der ersten Leine (2) geführt wird, die der ersten gegenüberliegt, bevor sie wieder in umgekehrter Richtung durch die erste Öse (8) geführt wird,
- und die Arretierleine (17) derart angepasst ist, dass der Befestigungsring (13), der mit der zweiten Leine (3) verbunden ist, zwischen der ersten und der zweiten Öse entlang der besagten zweiten Seite der ersten Leine (2) frei hin und her gleiten kann.

2. Vorrichtung nach Anspruch 1, **dadurch gekennzeichnet, dass** die Arretierschleife (7) der Arretierleine (17), nachdem sie durch den Befestigungsring (13) geführt worden ist, direkt durch die erste Öse (8) führt.

3. Vorrichtung nach einem der vorherigen Ansprüche, **dadurch gekennzeichnet, dass** die erste Leine (2) in jenem Zustand, in dem der Arretierstift (6) durch die Arretierschleife (7) geführt wird, zumindest eine Faltung aufweist, die sich zwischen der Befestigungsstelle des besagten Arretierstiftes (6) auf dieser ersten Leine und der zweiten Öse befindet, und dadurch, dass zwischen den beiden Schenkeln dieser so gebildeten Schleife, die einander gegenüber liegen, keine Vorrichtung zum Festhalten der besagten Schleife vorgesehen ist.

4. Vorrichtung nach einem der vorherigen Ansprüche, **dadurch gekennzeichnet, dass** die Arretierleine (17) im besagten eingeführten Zustand des Arretierstiftes auf einer Lasche positioniert ist, die sich dazu eignet, über einen Stauraum eines Gurtzeugbeutels zu kommen, in dem ein Beutel zum Entfalten der Reserve Platz findet, in dem der Reserveschirm gefaltet wird, wobei die besagte Arretierleine durch eine Klappe, die in einen Zwickel der Lasche eingreift, so positioniert wird.

5. Vorrichtung nach Anspruch 4, **dadurch gekennzeichnet, dass** die besagte Lasche mit der Arretierschleife (7) verbunden ist, durch die die Arretierleine (17) führt.

6. Vorrichtung nach einem der vorherigen Ansprüche, **dadurch gekennzeichnet, dass** die erste Leine (2) als Trägerin des Arretierstiftes im eingeführten Zustand des Arretierstiftes (6) über ein selbsthaftendes Band in zwei Abschnitten auf einer Lasche positioniert ist, die sich dazu eignet, über einen Stauraum eines Gurtzeugbeutels zu kommen, in dem ein Beutel zum Entfalten der Reserve Platz findet, in dem der Reserveschirm gefaltet wird, die jeweils auf der Klappe und der ersten Leine vorgesehen sind.

7. Vorrichtung nach irgendeinem der vorherigen Ansprüche, **dadurch gekennzeichnet, dass** eine elastische Rückholvorrichtung (39), unter der der Arretierstift (6) hindurchführt, wenn er in die Arretierschleife (7) eingeführt ist, den Arretierstift auf der ersten Leine (2) niederdrückt, und diesen dort festhält.

8. Vorrichtung nach Anspruch 7, **dadurch gekennzeichnet, dass** der Arretierstift (6) an einem Ende einen geschlossenen Ring (60) aufweist, über den der mit der ersten Leine (2) verbunden ist, und die elastische Rückholvorrichtung ein Gummiband ist, welches angeordnet ist, um den besagten geschlossenen Ring abzudecken, wenn der Arretierstift (6) in die Arretierschleife (7) eingeführt ist.

9. Vorrichtung nach irgendeinem der vorherigen Ansprüche, **dadurch gekennzeichnet, dass** die erste Leine (2) an der Stelle, an der der Arretierstift (6) lösbar in die Arretierschleife (7) eingeführt ist, eine Strukturversteifung (37) aufweist.

10. Vorrichtung nach irgendeinem der vorherigen Ansprüche, **dadurch gekennzeichnet, dass** der Arretierstift (6) an einem Ende einen geschlossenen Ring (60) aufweist, der sich in etwa tangential über einen verlängerten Abschnitt (160) hinweg erstreckt, um den sich die Arretierschleife (7) schlingt.

11. Vorrichtung nach irgendeinem der vorherigen Ansprüche, **dadurch gekennzeichnet, dass** der Befestigungsring (13) wie eine Leinenöse aussieht, durch die die Arretierleine (17) führt, während der Befestigungsring (13) der zweiten Leine (3) einen geschlossenen Metallring umfasst.

12. Fallschirm umfassend einen Hauptfallschirm (1), einen Reservefallschirm (5) und die Vorrichtung (10) nach einem der vorherigen Ansprüche.
